# EUROPEAN PATENT APPLICATION

(11) **EP 4 815 184 A1**
(43) Date of publication of application: **30.09.2026**
(21) Application number: 24921407.3
(22) Date of filing: 03.09.2024
(51) Int. Cl.: H01M 50/593, H01M 50/586, H01M 50/531

(54) **BATTERY CELL, BATTERY, AND ELECTRICAL APPARATUS**

(30) Priority: 02.02.2024 CN 202420264406 U
(71) Applicant: Contemporary Amperex Technology Co., Limited, Ningde, Fujian 352100 (CN)
(72) Inventor: LI, Wanjun, Ningde, Fujian 352100 (CN); LI, Hao, Ningde, Fujian 352100 (CN); LI, Xiaowei, Ningde, Fujian 352100 (CN); PEI, Zhenxing, Ningde, Fujian 352100 (CN)
(74) Representative: Ran, Handong
(86) International application number: PCT/CN2024/116519
(87) International publication number: WO 2025/161382

(57) **Abstract**

A battery cell (20), a battery, and an electrical apparatus, relating to the field of batteries. The battery cell (20) comprises: a casing (21), the casing (21) comprising a first wall (211) and an electrode terminal (212), the electrode terminal (212) being disposed on the first wall (211); an electrode assembly (22) provided in the casing (21), the electrode assembly (22) comprising an electrode connecting member (221), and the electrode connecting member (221) being electrically connected to the electrode terminal (212); and a high-temperature-resistant insulating layer (23), which is at least partially disposed between the first wall (211) and the electrode connecting member (221), so as to insulate and isolate the first wall (211) from the electrode connecting member (221). The battery cell (20) reduces the risk of thermal runaway.

## Description

### CROSS-REFERENCE TO RELATED APPLICATIONS

The present application claims priority to Chinese Patent Application 202420264406.X, filed with the China National Intellectual Property Administration on February 2, 2024 and entitled "BATTERY CELL, BATTERY, AND POWER CONSUMING APPARATUS", which is incorporated herein by reference in its entirety.

### TECHNICAL FIELD

The present application relates to the field of battery technologies, and in particular, to a battery cell, a battery, and a power consuming apparatus.

### BACKGROUND

Energy saving and emission reduction are crucial to the sustainable development of automobile industry. Electric vehicles have become an important constituent part of the sustainable development of automobile industry by virtue of their advantages of energy saving and environmental protection. The battery technology is an important factor related to the development of the electric vehicles.

A power battery generally includes a battery cell. How to reduce the risk of thermal runaway of the battery cell is a problem that needs to be solved urgently in the battery technologies.

### SUMMARY

In view of this, embodiments of the present application provide a battery cell, a battery, and a power consuming apparatus, so that the risk of thermal runaway of the battery cell can be reduced.

According to a first aspect, an embodiment of the present application provides a battery cell, including:
a shell including a first wall and an electrode terminal, where the electrode terminal is disposed on the first wall;
an electrode assembly disposed within the shell, the electrode assembly including an electrode connecting member, where the electrode connecting member is electrically connected to the electrode terminal; and
a high-temperature resistant insulation layer disposed at least in part between the first wall and the electrode connecting member, to insulate and space apart the first wall from the electrode connecting member.

The battery cell provided in this embodiment of the present application includes the shell, the electrode assembly, and the high-temperature resistant insulation layer. The shell includes the first wall and the electrode terminal disposed on the first wall. The electrode assembly includes the electrode connecting member. The high-temperature resistant insulation layer is disposed between the first wall and the electrode connecting member. The high-temperature resistant insulation layer has high-temperature resistance and insulation properties. During circulation of the battery cell, an internal temperature of the battery cell may gradually rise. The high-temperature resistant insulation layer can maintain good insulation performance in a high-temperature environment, reducing the risk of contact short-circuit between the shell and the electrode connecting member of the battery cell, and thereby improving insulation performance of the battery cell in a high-temperature environment. In this embodiment of the present application, thermal runaway limitation can be performed on the battery cell before a battery thermal runaway occurs, reducing the risk of thermal runaway, thereby improving safety and reliability of the battery cell.

In some embodiments, the electrode connecting member includes a tab and an adapter plate. The adapter plate includes a terminal connecting portion and a tab connecting portion connected to each other. The terminal connecting portion is connected to the electrode terminal, and the tab connecting portion is connected to the tab.

The high-temperature resistant insulation layer includes a protective adhesive disposed between the adapter plate and the first wall. In a thickness direction of the first wall, a projection of the tab connecting portion and a projection of the tab are located within a projection range of the protective adhesive.

With the foregoing technical solution, the protective adhesive covers the tab and the adapter plate. The protective adhesive does not easily melt, so that the risk of short circuit caused by the adapter plate and/or the tab directly contacting the shell can be significantly reduced, thereby reducing the risk of thermal runaway caused by a short circuit.

In some embodiments, there are a plurality of tab connecting portions in the adapter plate. The plurality of tab connecting portions are arranged in a width direction of the adapter plate. The terminal connecting portion is disposed between two adjacent ones of the tab connecting portions. The protective adhesive includes a plurality of adhesive sheets. The plurality of adhesive sheets are disposed in a one-to-one correspondence with the plurality of tab connecting portions.

With the foregoing technical solution, the plurality of adhesive sheets are spaced apart, thereby reducing an overall size of the high-temperature resistant insulation layer. Each adhesive sheet can be conveniently attached to the adapter plate, so that the attachment of the high-temperature resistant insulation layer is simple and easy to implement.

In some embodiments, a length of the adhesive sheet is greater than or equal to a length of the adapter plate, and a width of the adhesive sheet is greater than or equal to a width of the tab connecting portion.

The adhesive sheet satisfying the foregoing dimension conditions can cover the tab connecting portion of the adapter plate, effectively spacing apart the adapter plate and the shell, and thereby reducing the risk of short circuit due to a contact between the tab connecting portion and the shell.

In some embodiments, the tab includes a plurality of stacked tab plates. In a length direction of the adapter plate, a difference between the length of the adhesive sheet and a width of the tab plate is 12 mm to 14 mm.

In some embodiments, the width of the adhesive sheet satisfies:
$W 3 \geq \left[H+\left(W1-W2\right)\right] * 2 .$

W1 is the width of the tab connecting portion, W2 is a width of an overlap region of the tab connecting portion and the tab, W3 is the width of the adhesive sheet, and H is a height of the tab.

With the foregoing technical solution, a part of the adhesive sheet is attached to the electrode connecting member, and the other part is bent and then attached to a side surface of the electrode assembly, so that an adhesion effect is relatively strong, while the adhesive sheet can insulate the side surface of the electrode assembly from the shell. In addition, the adhesive sheet can cover the tab connecting portion of the adapter plate and the tab in the width direction thereof, resulting in a good insulation effect.

In some embodiments, the width of the adhesive sheet satisfies:
$W 3 = \left[H+\left(W1-W2\right)+2 mm\right] * 2 .$

With the foregoing technical solution, within a range permitted by a process tolerance, the adhesive sheet can cover the tab connecting portion of the adapter plate and the tab in the width direction, further improving reliability of insulation.

In some embodiments, a difference between the length of the adhesive sheet and the length of the adapter plate is 1 mm and -3 mm; and/or
a difference between the width of the adhesive sheet and the width of the tab connecting portion is 10 mm to 15 mm.

With the foregoing technical solution, the adhesive sheet has proper dimensions, so that it can cover the tab connecting portion of the adapter plate and the tab in width and length directions, while a waste of cost and occupied volume due to excessively large dimensions is avoided.

In some embodiments, a thickness of the protective adhesive is 0.1 mm to 0.5 mm.

By setting the thickness of the protective adhesive as satisfying the foregoing range, the protective adhesive has good high-temperature resistance and insulation performance, and the protective adhesive occupying too much space within the shell as a result of an excessively large thickness is avoided.

In some embodiments, the thickness of the protective adhesive is 0.1 mm to 0.3 mm. As such, the protective adhesive further has good bending performance, and is easy to attach onto the electrode assembly.

In some embodiments, a melting point of the protective adhesive is 320°C to 500°C.

The protective adhesive provided in this embodiment of the present application has a high melting point, so that the risk of contact short-circuit between the electrode connecting member and the shell caused by melting of the protective adhesive due to an excessively high temperature of the electrode assembly can be reduced, thereby reducing the risk of thermal runaway.

In some embodiments, the melting point of the protective adhesive is greater than 350°C and less than or equal to 500°C.

In some embodiments, the protective adhesive is a PI adhesive tape or a Teflon adhesive tape.

With the foregoing technical solution, the protective adhesive has good high-temperature resistance performance and insulation performance, has good chemical stability and advantages such as moisture resistance, humidity resistance, aging resistance, and corrosion resistance, and is applicable to a lithium battery system.

In some embodiments, the shell includes an end cover and a case. The end cover constitutes the first wall and fits and covers the case. A plastic member is disposed on a side of the end cover that faces the case. The plastic member is configured to space apart the end cover and the electrode assembly.

The high-temperature resistant insulation layer includes an insulation coating located between the end cover and the plastic member. A heat resistance temperature of the insulation coating is greater than a melting point of the plastic member.

In this embodiment of the present application, the insulation coating is disposed between the end cover and the plastic member, so that the risk of the electrode connecting member directly contacting the end cover caused by melting of the plastic member in a high-temperature environment can be reduced. That is, the risk of short circuit occurring between the electrode connecting member and the shell is reduced, thereby reducing the risk of thermal runaway caused by an internal short circuit of the battery cell, and improving the safety and reliability of the battery cell.

In some embodiments, the insulation coating is disposed on a surface of the end cover facing the case and does not cover the electrode terminal.

The insulation coating is disposed on the end cover and easy to produce, forms a uniform film, and can achieve a good insulation effect between the end cover and the electrode assembly.

In some embodiments, in the thickness direction of the first wall, a projection of the electrode connecting member is located within a projection range of the insulation coating.

In some embodiments, the heat resistance temperature of the insulation coating is 400°C to 1000°C.

The insulation coating has a high heat resistance temperature. In a process in which the temperature of the battery cell gradually rises and when a thermal runaway occurs, the insulation coating can maintain the chemical performance thereof for a long time. The insulation coating can space apart the end cover and the electrode assembly. The insulation coating is applicable to a lithium battery system.

In some embodiments, a material of the insulation coating includes an organic polymer or a metal oxide. The organic polymer includes one of polytetrafluoroethylene, polyethylene, polypropylene, polyethylene terephthalate, and polyimide. The metal oxide includes one of aluminum oxide, aluminum hydroxide, titanium dioxide, and magnesium oxide.

With the foregoing technical solutions, the insulation coating of the material described above has good insulation performance and a high-temperature resistance property.

In some embodiments, a thickness of the insulation coating is 0.05 mm to 0.15 mm.

With the foregoing technical solution, the thickness of the insulation coating does not cause a significant increase in a thickness of the end cover, while a good protection effect can be achieved.

In some embodiments, the battery cell further includes a high-temperature resistant protective film. The high-temperature resistant protective film is wrapped on at least part of the shell. A melting point of the high-temperature resistant protective film is greater than or equal to 500°C.

The melting point of the high-temperature resistant protective film is greater than or equal to 500°C. When a temperature rise is caused by large-current charging and discharging or a thermal runaway of the electrode assembly, the high-temperature resistant protective film on the surface of the electrode assembly is not melted, so that heat transfer between the battery cells in a module can be reduced. As such, temperatures of adjacent ones of the battery cells are reduced, thereby reducing the risk of thermal propagation, which further improves the safety.

In some embodiments, a material of the high-temperature resistant protective film includes PI adhesive.

Since the PI adhesive has good heat resistance, compared to a conventional blue film, the high-temperature resistant protective film significantly improves resistance performance.

In some embodiments, a thickness of the high-temperature resistant protective film is 0.15 mm to 0.25 mm.

With the foregoing technical solution, the high-temperature resistant protective film can not only achieve a good protection effect on the battery cell, but also avoid occupying too much space within the module.

According to a second aspect, an embodiment of the present application provides a battery, including the battery cell as provided in the first aspect.

According to a third aspect, an embodiment of the present application provides a power consuming apparatus, including the battery as provided in the second aspect.

The above description is merely an overview of the technical solutions of the present application. To understand the technical means of the present application more clearly, it can be implemented according to the content of the specification. To make the foregoing and other objectives, features and advantages of the present application more apparent, the specific implementations of the present application are listed below.

### BRIEF DESCRIPTION OF THE DRAWINGS

To describe the technical solutions of the embodiments of the present application more clearly, the following briefly introduces the accompanying drawings required for describing the embodiments or conventional technologies. Apparently, the accompanying drawings in the following description show only some embodiments of the present application, and a person of ordinary skill in the art may still derive other drawings from these accompanying drawings without creative effort.
FIG. 1 is a schematic structural diagram of a vehicle according to some embodiments of the present application;
FIG. 2 is a schematic structural diagram of a battery according to some embodiments of the present application;
FIG. 3 is a schematic structural diagram of a battery cell according to some embodiments of the present application;
FIG. 4 is a schematic structural diagram of an electrode assembly according to some embodiments of the present application;
FIG. 5 is a schematic structural diagram of an electrode assembly and a high-temperature resistant insulation layer according to some embodiments of the present application;
FIG. 6 is a schematic structural diagram of a high-temperature resistant insulation layer on an end cover according to some embodiments of the present application; and
FIG. 7 is a schematic structural diagram of a first wall according to some embodiments of the present application.

List of reference numerals:
1000. vehicle; 100. battery. 200. controller; 300. motor; 10. box; 11. first portion; 12. second portion; 20. battery cell; 21. shell; 211. first wall; 2113. electrode lead-out hole; 212. electrode terminal; 213. case; 214. plastic member; 215. top patch; 22. electrode assembly; 221. electrode connecting member; 2211. tab; 22111. tab plate; 2211a. positive tab; 2211b. negative tab; 2212. adapter plate; 2212a. terminal connecting portion; 2212b. tab connecting portion; 222. body; 223. insulation plate; 23. high-temperature resistant insulation layer; 231. protective adhesive; 2311. adhesive sheet; 232. insulation coating; and 24. high-temperature resistant protective film.

### DETAILED DESCRIPTION

Embodiments of the technical solutions of the present application will be described in detail below with reference to the accompanying drawings. The following embodiments are used only to describe the technical solutions of the present application more explicitly, and therefore are interpreted only as examples, rather than as limitations on the protection scope of the present application.

Unless otherwise defined, all technical and scientific terms used herein have the same meaning as commonly understood by those skilled in the technical field to which the present application relates. The terminology used herein is for the purpose of describing particular embodiments only and is not intended to limit the present application. The terms "including" and "having" and any variations thereof in the description and claims of the present application and the foregoing description of the accompanying drawings are intended to cover non-exclusive inclusions.

In the description of the embodiments of the present application, the technical terms "first", "second", and the like are intended only to distinguish different objects, and should not be understood as indicating or implying relative importance or implying the number, specific order, or primary and secondary relationship of indicated technical features. In the description of the embodiments of the present application, "a plurality of" means two or more, unless otherwise expressly and specifically defined.

Reference to "embodiment" herein means that particular features, structures, or characteristics described with reference to the embodiment may be included in at least one embodiment of the present application. The term appearing at different positions in this specification may not refer to the same embodiment or an independent or alternative embodiment that is mutually exclusive with another embodiment. A person skilled in the art explicitly or implicitly understands that the embodiments described herein may be combined with other embodiments.

In the description of the present application, the term "and/or" is merely an association to describe the associated objects. It can mean that there are three kinds of relationships, such as A and/or B, which means that A exists alone, A and B exist at the same time, and B exists alone. In addition, the character "/" herein generally indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, the orientations or positional relationships indicated by the technical terms such as "center", "longitudinal", "transverse", "length", "width", "thickness", "upper", "lower", "front", "rear", "vertical", "horizontal", "top", "bottom", "inside", and "outside" are based on the orientations or positional relationships shown in the accompanying drawings, and are only for the convenience of describing the present application and simplifying the description, rather than indicating or implying that the involved device or element should have a specific orientation or should be configured or operated in the specific orientation, and therefore cannot be understood as limitations on the embodiments of the present application.

In the description of the embodiments of the present application, unless otherwise explicitly specified and defined, the technical terms "mounted", "connected", "connect", "fixed", and the like should be understood in a broad sense. For example, a connection may refer to a fixed connection, a detachable connection, or an integral connection; a mechanical connection or an electrical connection; a direct connection, an indirect connection via an intermediate medium, internal communication between two elements, or an interaction between two elements. For a person of ordinary skill in the art, the specific meanings of the above terms in the embodiments of the present application may be interpreted according to the specific situations.

The safety of lithium batteries has constantly been the focus of people's research. The risk in the safety of lithium batteries is mainly uncontrollable heat generation resulting from an internal/external short circuit of a cell due to overcharging abuse, external heating, physical collision, internal defects, and the like, which finally leads to thermal propagation and even burning or exploding of the cell, causing a safety accident. However, most of thermal runaways are caused by internal short circuits. After a local internal short circuit occurs, a cell rapidly discharges, resulting in a temperature rise, thereby causing thermal contraction of a separator or melting of the separator, which further exacerbates a short circuit hazard. Then a temperature of a battery rapidly rises, accompanied with chain reactions such as electrolyte decomposition and material decomposition, finally causing burning or exploding of the battery.

In view of this, the present application provides a battery cell, so that the risk of internal short-circuit of the battery cell can be reduced, thereby reducing the risk of thermal runaway of the battery cell, and reducing the risk of thermal propagation occurring between battery cells. The battery cell provided in the embodiments of the present application includes a shell, an electrode assembly, and a high-temperature resistant insulation layer. An electrode terminal is provided on a first wall of the shell. An electrode connecting member is provided on the electrode assembly. The high-temperature resistant insulation layer is disposed between the first wall and the electrode connecting member. The high-temperature resistant insulation layer has high-temperature resistance and insulation properties. When an internal temperature of the battery cell rises, the high-temperature resistant insulation layer can still isolate the shell from the electrode connecting member, reducing the risk of short circuit occurring between the shell and the electrode connecting member, thereby reducing the risk of thermal runaway caused by an internal short-circuit of the battery cell, and reducing the risk of burning or even exploding of the battery cell.

The battery cell provided in the embodiments of the present application can be used in a power consuming apparatus that use a battery as a power source. The power consuming apparatus may be, but is not limited to, a mobile phone, a tablet, a laptop computer, an electric toy, an electric tool, an electric bicycle, an electric automobile, a ship, a spacecraft, or the like. The electric toy may include a stationary or mobile electric toy, such as a game machine, an electric car toy, an electric ship toy, and an electric airplane toy. The spacecraft may include an airplane, a rocket, a space shuttle, a spaceship, or the like.

For ease of description in the following embodiments, an example in which a power consuming apparatus according to an embodiment of the present application is a vehicle 1000 is used for description.

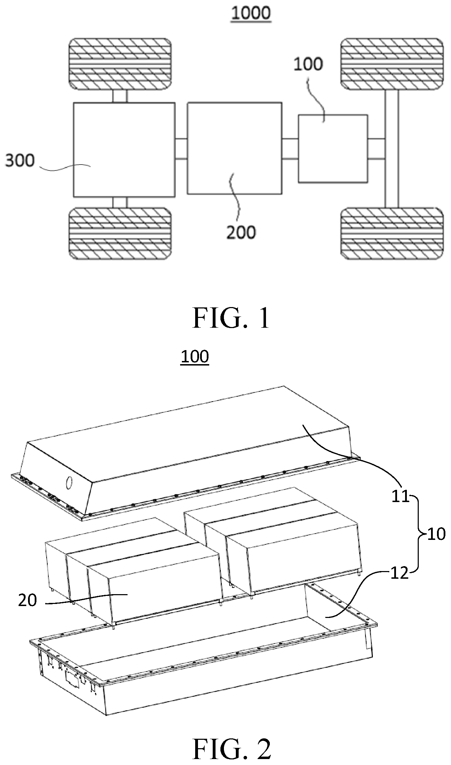

Referring to FIG. 1, FIG. 1 is a schematic structural diagram of a vehicle 1000 according to some embodiments of the present application. The vehicle 1000 may be a fuel powered vehicle, a gas powered vehicle, or a new energy vehicle. The new energy vehicle may be a pure electric vehicle, a hybrid electric vehicle, an extended-range vehicle, or the like. A battery 100 is disposed inside the vehicle 1000, and the battery 100 may be disposed at a bottom, head, or tail of the vehicle 1000. The battery 100 may be configured to supply power to the vehicle 1000. For example, the battery 100 may serve as a power supply for operating the vehicle 1000. The vehicle 1000 may further include a controller 200 and a motor 300. The controller 200 is configured to control the battery 100 to supply power to the motor 300, for example, to meet demands for working power during starting, navigation, and traveling of the vehicle 1000.

In some embodiments of the present application, the battery 100 may serve not only as an operating power supply of the vehicle 1000, but also as a driving power supply of the vehicle 1000, to alternatively or partially replace fuel or natural gas for providing driving power for the vehicle 1000.

Referring to FIG. 2, FIG. 2 is an exploded view of a battery 100 according to some embodiments of the present application. In some embodiments, the battery 100 includes a box 10 and a battery cell 20, where the battery cell 20 is accommodated in the box 10.

The box 10 is configured to provide an accommodating space for the battery cell. The box 10 may be of a variety of structures. In some embodiments, the box 10 may include a first portion 11 and a second portion 12. The first portion 11 and the second portion 12 fit and cover each other. The first portion 11 and the second portion 12 jointly define the accommodating space for accommodating the battery cell. The second portion 12 may be of a hollow structure with an opening at one end, and the first portion 11 may be of a plate-like structure, where the first portion 11 fits and covers an opening side of the second portion 12, so that the first portion 11 and the second portion 12 jointly define the accommodating space. Alternatively, the first portion 11 and the second portion 12 each may be of a hollow structure with an opening on one side, where an opening side of the first portion 11 fits and covers an opening side of the second portion 12. Certainly, the box 10 formed by the first portion 11 and the second portion 12 may be in various shapes, such as a cylinder and a cuboid.

In the battery 100, there may be a plurality of battery cells 20. The plurality of battery cells 20 may be connected in series, parallel, or series-parallel. Series-parallel connection means that the plurality of battery cells 20 are connected both in series and in parallel. The plurality of battery cells 20 may be directly connected together in series, parallel, or series-parallel, and then a whole formed by the plurality of battery cells 20 are accommodated in the box 10. Certainly, the battery 100 may alternatively be formed by a plurality of battery cells 20 connected in series, parallel, or series-parallel first to form a battery module and then a plurality of battery modules being connected in series, parallel, or series-parallel to form a whole which is accommodated in the box 10. The battery 100 may further include other structures. For example, the battery 100 may further include a bus-bar component configured to implement electrical connection between the plurality of battery cells 20.

Each battery cell 20 may be a secondary battery or a primary battery, or may be a lithium-sulfur battery, a sodium-ion battery, or a magnesium-ion battery, but is not limited thereto. The battery cell 20 may be cylindrical, flat-shaped, cuboid-shaped, or in another shape.

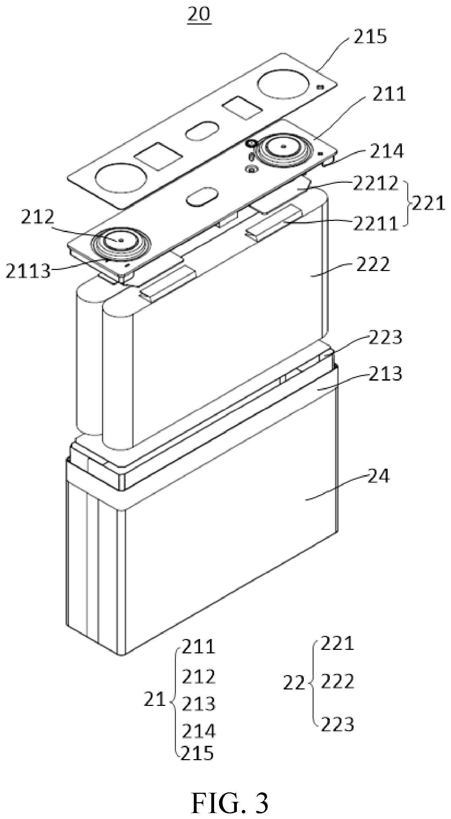

According to a first aspect, an embodiment of the present application provides a battery cell 20. Referring to FIG. 3 to FIG. 5, the battery cell 20 includes a shell 21, an electrode assembly 22, and a high-temperature resistant insulation layer 23. The shell 21 includes a first wall 211 and an electrode terminal 212. The electrode terminal 212 is disposed on the first wall 211. The electrode assembly 22 is disposed within the shell 21. The electrode assembly 22 includes an electrode connecting member 221. The electrode connecting member 221 is electrically connected to the electrode terminal 212. The high-temperature resistant insulation layer 23 is disposed between the first wall 211 and the electrode connecting member 221, to insulate and space apart the first wall 211 from the electrode connecting member 221.

The shell 21 is an element configured to form an internal environment of the battery cell 20, where the internal environment formed by the shell 21 may be used for accommodating the electrode assembly 22, an electrolyte, and other components. The shell 21 may include a case 213 with an opening end and an end cover that covers the case 213, or may be an integrally molded structure. The shell 21 may be of various shapes and dimensions, such as a cuboid, a cylinder, and a hexagonal prism. Specifically, the shape of the shell 21 may be determined based on a specific shape and dimension of the electrode assembly 22. The shell 21 may be made of various materials, such as copper, iron, aluminum, stainless steel, aluminum alloy, and plastic. An electrode lead-out hole 2113 is provided on the first wall 211 of the shell 21. The first wall 211 provided with the electrode lead-out hole 2113 may be disposed on a side portion, a top portion, or a bottom portion of the shell 21. The electrode lead-out hole 2113 is used for mounting the electrode terminal 212. The electrode lead-out hole 2113 may be a circular through-hole, or may be a through-hole of another shape.

The electrode assembly 22 is a component in which electrochemical reactions occur in the battery cell 20. There may be one or more electrode assemblies 22 within the shell 21. The electrode assembly 22 is mainly formed by winding or stacking a positive electrode plate and a negative electrode plate, and a separator is generally disposed between the positive electrode plate and the negative electrode plate. Portions of the positive electrode plate and the negative electrode plate with active materials constitute a body portion of the electrode assembly 22, while portions of the positive electrode plate and the negative electrode plate without active materials each constitute a tab 2211.

The electrode connecting member 221 in this embodiment of the present application includes at least the tab 2211. In some embodiments, the electrode connecting member 221 may further include another element electrically connected between the tab 2211 and the electrode terminal 212. For example, the electrode connecting member 221 includes the tab 2211 and an adapter plate 2212, where the adapter plate 2212 is welded to each of the tab 2211 and the electrode terminal 212. During charging and discharging of the battery cell 20, a positive electrode active material and a negative electrode active material react with the electrolyte, and the electrode connecting member 221 is connected to the electrode terminal 212 to form a current loop.

The electrode terminal 212 runs through the electrode lead-out hole 2113. The electrode terminal 212 is configured to be electrically connected to an external power consuming element, and is further configured to be electrically connected to the electrode connecting member 221. The electrode terminal 212 in this embodiment of the present application may be a negative electrode terminal, or may be a positive electrode terminal.

The high-temperature resistant insulation layer 23 is disposed between the first wall 211 and the electrode connecting member 221. The high-temperature resistant insulation layer 23 is configured to isolate the first wall 211 from the electrode connecting member 221. The high-temperature resistant insulation layer 23 has high-temperature resistance and insulation properties. The high-temperature resistant insulation layer 23 has a high heat resistance temperature, so that insulation performance of the high-temperature resistant insulation layer 23 can be kept effective for a long time in a high-temperature environment. The insulation performance of the high-temperature resistant insulation layer 23 does not easily fail due to the fact that the battery cell 20 is in a high-temperature environment, thereby reducing the risk of contact short-circuit between the shell 21 and the electrode connecting member 221 of the battery cell 20, and improving insulation performance of the battery cell 20 in a high-temperature environment.

The high-temperature resistant insulation layer 23 may be disposed on a surface of the first wall 211 that faces the electrode assembly 22, or may be disposed on a surface of the electrode connecting member 221 that faces the first wall 211. A material of the high-temperature resistant insulation layer 23 may be an inorganic material or organic material, or may be a mixture of an inorganic material and an organic material. It should be noted that, regardless of the material the high-temperature resistant insulation layer 23, the high-temperature resistant insulation layer 23 may be of a high-temperature resistant insulation material that is common in the art.

The battery cell 20 provided in this embodiment of the present application includes the shell 21, the electrode assembly 22, and the high-temperature resistant insulation layer 23. The shell 21 includes the first wall 211, and the electrode terminal 212 is disposed on the first wall 211. The electrode assembly 22 has the electrode connecting member 221. The high-temperature resistant insulation layer is disposed between the first wall 211 and the electrode connecting member 221. The high-temperature resistant insulation layer has high-temperature resistance and insulation properties. During circulation of the battery cell 20, an internal temperature of the battery cell 20 may gradually rise. The high-temperature resistant insulation layer can maintain good insulation performance in a high-temperature environment, reducing the risk of contact short-circuit between the shell 21 and the electrode connecting member 221 of the battery cell 20, and thereby improving insulation performance of the battery cell 20 in a high-temperature environment. As such, the risk of thermal runaway is reduced, improving the safety and reliability of the battery cell 20, and the risk of thermal propagation occurring between the battery cells 20 is reduced.

In some embodiments, the heat resistance temperature of the high-temperature resistant insulation layer is greater than 300°C.

The heat resistance temperature is a term in the field of material science, and refers to a temperature indicating that performance of a material can be kept unchanged at a high temperature. Heat resistance temperatures of different materials vary due to factors such as their compositions, structures, and preparation processes. At a high temperature, some materials may experience phenomena such as a chemical reaction, decomposition, oxidation, or melting, and lose their original performance. Therefore, the heat resistance temperature is one of important indicators for measuring performance of a material at a high temperature. The heat resistance temperature of the high-temperature resistant insulation layer provided in this embodiment of the present application is greater than 300°C. When the temperature of the battery cell 20 gradually rises during cyclic use, the high-temperature resistant insulation layer can maintain the insulation performance for a long time, thereby reducing the risk of short circuit between the electrode assembly 22 and the shell 21, and improving the safety of the battery cell 20.

Referring to FIG. 3 to FIG. 5, in some embodiments, the electrode connecting member 221 includes the tab 2211 and the adapter plate 2212. The adapter plate 2212 is connected between the tab 2211 and the electrode terminal 212. The adapter plate 2212 includes a terminal connecting portion 2212a connected to the electrode terminal 212 and a tab connecting portion 2212b connected to the tab 2211. The high-temperature resistant insulation layer 23 includes a protective adhesive 231 disposed between the adapter plate 2212 and the first wall 211. In a thickness direction of the first wall 211, a projection of the tab connecting portion 2212b and a projection of the tab 2211 are located within a projection range of the protective adhesive 231. The tab connecting portion 2212b and the tab 2211 are covered by the protective adhesive 231, while the terminal connecting portion 2212a is not covered by the protective adhesive 231.

Specifically, the electrode assembly 22 includes a body 222 and the electrode connecting member 221. The electrode connecting member 221 includes the tab 2211 and the adapter plate 2212. The tab 2211 extends out from an end of the body that is close to the first wall 211. The body 222 is a core portion of the electrode assembly 22 that implements charging and discharging functions. The tab 2211 is configured to lead out a current generated by the body. The body includes a positive current collection portion of a positive current collector, a positive active material layer, a negative current collection portion of a negative current collector, a negative active material layer, and a separating member. There may be two tabs 2211. The two tabs 2211 are a positive tab 2211a and a negative tab 2211b, respectively. The positive tab 2211a and the negative tab 2211b may be led out from a same end of the electrode assembly 22, or may be led out from two opposite ends of the electrode assembly 22, respectively.

There may be one or more electrode assemblies 22 accommodated in the shell 21. For example, in FIG. 3, there are two electrode assemblies 22. Each electrode assembly 22 has a positive tab 2211a and a negative tab 2211b. One adapter plate 2212 connects two positive tabs 2211a, and another adapter plate 2212 connects two negative tabs 2211b.

The adapter plate 2212 is disposed on a side of the tab 2211 that is close to the first wall 211. The adapter plate 2212 is configured to electrically connect the electrode terminal 212 and the tab 2211. The adapter plate 2212 includes the terminal connecting portion 2212a connected to the electrode terminal 212 and the tab connecting portion 2212b connected to the tab 2211. The tab connecting portion 2212b is covered by the protective adhesive 231, to reduce the risk of the tab 2211 and the tab connecting portion 2212b being in contact with the shell 21. The terminal connecting portion 2212a is not covered by the protective adhesive 231, so that the high-temperature resistant insulation layer 23 does not affect connection of the adapter plate 2212 with the electrode terminal 212.

The tab 2211 is also covered by the protective adhesive 231, where a portion of the tab 2211 that is covered by the tab connecting portion 2212b is necessarily covered by the protective adhesive 231; and a portion of the tab 2211 that is not covered by the protective adhesive 231 may also be covered by the protective adhesive 231. It may be understood that the protective adhesive 231 can completely cover the tab 2211, to reduce the risk of short circuit.

To lead out the current generated by the body of the electrode assembly 22, the adapter plate 2212 has electrical conductivity. The protective adhesive 231 is disposed between the adapter plate 2212 and the first wall 211. The high-temperature resistant insulation layer 23 may be fixed on the adapter plate 2212, or may be fixed on the first wall 211. Alternatively, the protective adhesive 231 is disposed on both the adapter plate 2212 and the first wall 211. The protective adhesive 231 is a high-temperature resistant protective adhesive, and may be of various materials, such as PI adhesive.

With the foregoing technical solution, the high-temperature resistant insulation layer 23 includes the protective adhesive 231 disposed between the adapter plate 2212 and the first wall 211. The protective adhesive 231 covers the tab 2211 and the adapter plate 2212. When a temperature of the electrode assembly 22 is excessively high, the protective adhesive 231 does not easily melt, so that the risk of short circuit caused by the adapter plate 2212 and/or the tab 2211 directly contacting the shell 21 can be significantly reduced, thereby reducing the risk of thermal runaway caused by a short circuit.

In some embodiments, there are a plurality of tab connecting portions 2212b in the adapter plate 2212. The plurality of tab connecting portions 2212b are arranged in a width direction of the adapter plate 2212. The terminal connecting portion 2212a is disposed between two adjacent ones of the tab connecting portions 2212b. The protective adhesive 231 includes a plurality of adhesive sheets 2311. The plurality of adhesive sheets 2311 are disposed in a one-to-one correspondence with the plurality of tab connecting portions 2212b.

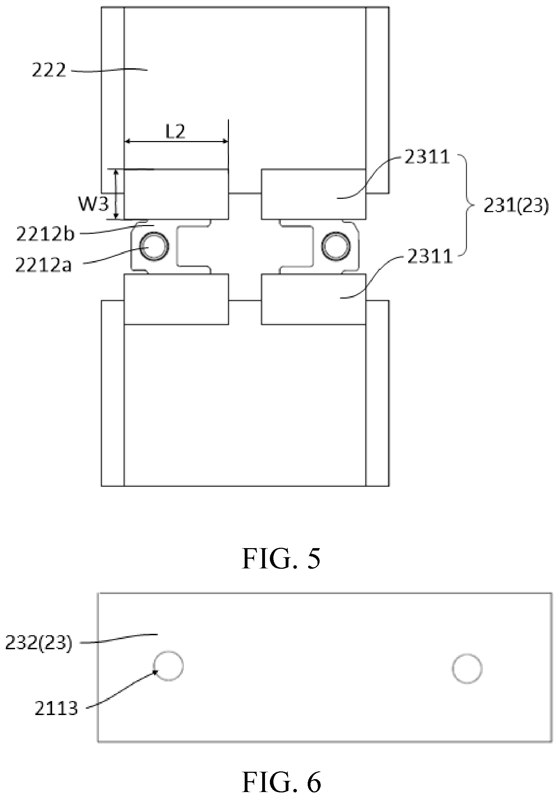

Referring to FIG. 5, there are a plurality of tabs 2211. The adapter plate 2212 is provided with two tab connecting portions 2212b in the width direction thereof. The terminal connecting portion 2212a is disposed between the two tab connecting portions 2212b. Each tab connecting portion 2212b is configured to be connected to one corresponding tab 2211. The protective adhesive 231 includes a plurality of adhesive sheets 2311 spaced apart. The adhesive sheets 2311 are disposed in a one-to-one correspondence with the tab connecting portions 2212b and disposed in a one-to-one correspondence with the tabs 2211, so as to cover the corresponding tab connecting portions 2212b and the corresponding tabs 2211.

For example, four tabs 2211 are disposed within the shell 21. The four tabs 2211 include two positive tabs 2211a and two negative tabs 2211b. The number of the electrode terminals 212 and the number of the adapter plates 2212 are both two. Two tab connecting portions 2212b of one adapter plate 2212 are connected to the two positive tabs 2211a respectively, and two tab connecting portions 2212b of the other adapter plate 2212 are connected to the two negative tabs 2211b respectively. The high-temperature resistant insulation layer 23 includes four adhesive sheets 2311. The four adhesive sheets 2311 are disposed in a one-to-one correspondence with the four tab connecting portions 2212b and disposed in a one-to-one correspondence with the four tabs 2211.

With the foregoing technical solution, the plurality of adhesive sheets 2311 are spaced apart, thereby reducing an overall size of the high-temperature resistant insulation layer 23. Each adhesive sheet 2311 can be conveniently attached to the adapter plate 2212, so that the attachment of the high-temperature resistant insulation layer 23 is simple and easy to implement.

It may be understood that, in other embodiments, adjacent ones of the adhesive sheets 2311 may also be connected to each other. For example, the protective adhesive 231 is a whole structure that covers both of the two adapter plates 2212, and the protective adhesive 231 is provided with a through-hole used for exposing the terminal connecting portion 2212a. For another example, the protective adhesive 231 includes two adhesive sheets 2311 spaced apart, where each adhesive sheet 2311 covers one adapter plate 2212 and is provided with a through-hole used for exposing the terminal connecting portion 2212a.

In some embodiments, a length of the adhesive sheet 2311 is greater than or equal to a length of the adapter plate 2212, and a width of the adhesive sheet 2311 is greater than or equal to a width of the tab connecting portion 2212b. The adhesive sheet 2311 can cover the tab connecting portion 2212b, and the adhesive sheet 2311 can cover an edge of the body 222. A portion of the adhesive sheet 2311 that extends out from the tab can be bent and then attached to the body 222.

The adhesive sheet 2311 satisfying the foregoing dimension conditions can cover the tab connecting portion 2212b of the adapter plate 2212, effectively spacing apart the adapter plate 2212 and the shell 21, and thereby reducing the risk of short circuit due to a contact between the tab connecting portion 2212b and the shell 21.

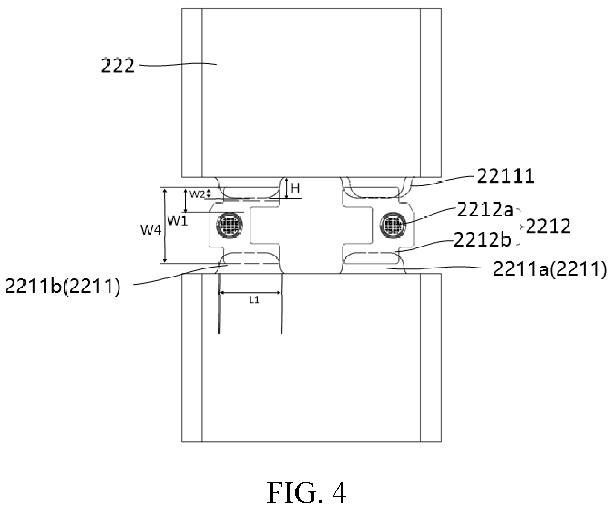

Referring to FIG. 3 to FIG. 5, in some embodiments, the tab 2211 includes a plurality of stacked tab plates 22111. L1 in FIG. 4 represents a width of the tab plate 22111, and L2 in FIG. 5 represents the length of the adhesive sheet 2311. In a length direction of the adapter plate 2212, a difference between the length L2 of the adhesive sheet 2311 and the width L1 of the tab plate 22111 is 12 mm to 14 mm, that is:
$12 mm \leq L 2 - L 1 \leq 14 mm .$

Since each tab 2211 includes a plurality of stacked tab plates 22111, there may be a case where the plurality of tab plates 22111 are staggered. Considering a tolerance, when the length of the adhesive sheet 2311 satisfies the foregoing dimension requirement, the adhesive sheet 2311 can cover each tab plate 22111, and the adhesive sheet 2311 can isolate the adapter plate 2212/tab 22111 from the first wall 211 in the length direction of the adapter plate 2212.

Referring to FIG. 3 to FIG. 5, an end of the tab 2211 is led out from the body 222, and the other end of the tab 2211 is connected to the adapter plate 2212. The tab 2211 and the tab connecting portion 2212b are stacked. The tab 2211 may be located on a side of the tab connecting portion 2212b that is close to the first wall 211, or the tab 2211 may be located on a side of the tab connecting portion 2212b that faces away from the first wall 211. To improve an insulation effect, the adhesive sheet 2311 may cover two opposite ends of the tab 2211. The tab connecting portion 2212b has a region that overlaps the tab 2211. The tab connecting portion 2212b further has a region that does not overlap the tab 2211. To improve the insulation effect, the adhesive sheet 2311 may cover the tab connecting portion 2212b. As such, the adhesive sheet 2311 can effectively prevent a contact short-circuit between the shell 21 and the tab 2211 as well as the adapter plate 2212 excluding the terminal connecting portion 2212a.

In some embodiments, the width of the adhesive sheet 2311 satisfies:
$W 3 \geq \left[H+\left(W1-W2\right)\right] * 2 .$

W1 is the width of the tab connecting portion 2212b, W2 is a width of an overlap region of the tab connecting portion 2212b and the tab 2211, W3 is the width of the adhesive sheet 2311, and H is a height of the tab 2211. A difference between W1 and W2 represents a width of the region of the tab connecting portion 2212b that does not overlap the tab 2211, that is, a width between the terminal connecting portion 2212a and the tab 2211. The region of the tab connecting portion 2212b that does not overlap the tab 2211 may be covered by the adhesive sheet 2311. Further, "H + (W1-W2)" represents a sum of the height of the tab 2211 and the width of the region of the tab connecting portion 2212b that does not overlap the tab 2211, which may also be understood as a distance from the terminal connecting portion 2212a to a root of the tab 2211. Meanwhile, half of the adhesive sheet 2311 in a width direction thereof is attached to the tab 2111 and the adapter plate 2212, and the other half is attached to a side surface of the electrode assembly 22. resulting in W3 ≥ [H + (W1-W2)] * 2. In addition, W4 in FIG. 4 is a width of the adapter plate 2212.

The width W1 of the tab connecting portion 2212b is a distance from the terminal connecting portion 2212a to an edge of the adapter plate 2212 in the width direction thereof. When the terminal connecting portion 2212a is a boss, W1 is a distance from the boss to the edge of the adapter plate 2212 in the width direction of the adapter plate 2212.

With the foregoing technical solution, a part of the adhesive sheet 2311 is attached to the electrode connecting member 221, and the other part is bent and then attached to the side surface of the electrode assembly 22, so that an adhesion effect is relatively strong, while the adhesive sheet 2311 can insulate the side surface of the electrode assembly 22 from the shell 21. In addition, the adhesive sheet 2311 can cover the tab connecting portion 2212b of the adapter plate 2212 and the tab 2211 in the width direction thereof, resulting in a good insulation effect.

In some embodiments, the width of the adhesive sheet satisfies:
$W 3 = \left[H+\left(W1-W2\right)+2 mm\right] * 2 .$

2 mm is a margin value set with consideration of a process tolerance. When there is a deviation in an attachment position of the adhesive sheet 2311 or there is a deviation in a width dimension of the adhesive sheet 2311, the adhesive sheet 2311 can still space apart the electrode connecting member 221 and the first wall 211. Through fulfillment of the foregoing technical solution, the insulation reliability of the adhesive sheet 2311 is further improved.

In some embodiments, a thickness of the protective adhesive 231 is 0.1 mm to 0.5 mm. For example, the thickness of the protective adhesive 231 may be 0.1 mm, 0.2 mm, 0.3 mm, 0.4 mm, 0.5 mm, or the like. By setting the thickness of the protective adhesive 231 as satisfying the foregoing range, the protective adhesive 231 has good high-temperature resistance and insulation performance, and the protective adhesive 231 occupying too much space within the shell 21 as a result of an excessively large thickness is avoided.

In some embodiments, the thickness of the protective adhesive 231 is 0.1 mm to 0.3 mm. As such, the protective adhesive 231 further has good bending performance, and is easy to attach onto the electrode assembly 22.

In some embodiments, the protective adhesive 231 is a polyimide (PI for short) adhesive tape or a Teflon adhesive tape.

The PI adhesive tape refers to a high-temperature resistant adhesive tape whose material includes PI. Generally, for the PI adhesive tape, a polyimide thin film is used as a base material, and an adhesive layer is provided on the base material. The PI adhesive tape has properties such as high and low-temperature resistance, acid and alkali resistance, solvent resistance, and electrical insulation. In some embodiments, a melting point of the PI adhesive tape may reach 375°C. The melting point refers to a temperature at which a physical state of a solid is transformed (melted) from a solid state into a liquid state.

A Teflon adhesive tape refers to a high-temperature resistant adhesive tape whose material includes Teflon. Generally, for the Teflon adhesive tape, glass fiber is used as a base cloth, which is coated with a Teflon solution and then dried in an oven to prepare a Teflon glass fiber cloth, and then coating is performed again with a silicon adhesive for manufacturing. The Teflon adhesive tape has features such as high strength, high-temperature resistance, smooth surface, and chemical-corrosion resistance, and has good electrical insulation performance, good stability, and good durability. In some embodiments, a melting point of the Teflon adhesive tape can reach 375°C.

With the foregoing technical solution, the protective adhesive 231 is a PI adhesive tape or a Teflon adhesive tape. The protective adhesive 231 has good high-temperature resistance performance and insulation performance, has good chemical stability and advantages such as moisture resistance, humidity resistance, aging resistance, and corrosion resistance, and is applicable to a lithium battery system. When the temperature of the electrode assembly 22 is excessively high, the protective adhesive 231 does not easily melt, so that the risk of short circuit caused by the adapter plate 2212 and/or the tab 2211 directly contacting the shell 21 can be reduced, thereby reducing the risk of thermal runaway caused by a short circuit. It may be understood that the protective adhesive 231 may alternatively be of another high-temperature resistant insulation material.

In some embodiments, a melting point of the protective adhesive 231 is 320°C to 500°C.

Taking the PI adhesive tape as an example, the melting point of the PI adhesive tape is related to a density of PI, and the melting point of the PI adhesive tape may be 200°C to 500°C. To improve temperature resistance performance of the protective adhesive 231, the melting point of the PI adhesive selected in this embodiment of the present application may be 320°C to 500°C, such as 320°C, 375°C, 400°C, or 500°C. Taking the Teflon adhesive tape as an example, the melting point of the Teflon adhesive tape can reach 327°C, 375°C, or the like. It may be understood that the protective adhesive 231 may alternatively be of another material or a hybrid material including PI or Teflon. The melting point of the protective adhesive 231 is also within the range of 320°C to 500°C.

The protective adhesive 231 provided in this embodiment of the present application has a high melting point, so that the risk of contact short-circuit between the electrode connecting member 221 and the shell 21 caused by melting of the protective adhesive 231 due to an excessively high temperature of the electrode assembly 22 can be reduced, thereby reducing the risk of thermal runaway.

In some embodiments, the melting point of the protective adhesive 231 is greater than 350°C and less than or equal to 500°C. For example, the melting point of the protective adhesive 231 may be 360°C, 400°C, 450°C, 500°C, or the like.

With the foregoing technical solution, the protective adhesive 231 employed in this embodiment of the present application has a high melting point, so that even if the internal temperature of the battery cell 20 rises or a thermal runaway occurs, the protective adhesive 231 can refrain from melting, thereby reducing the risk of short-circuit occurring between the electrode connecting member 221 and the first wall 211, and reducing the risk of thermal propagation.

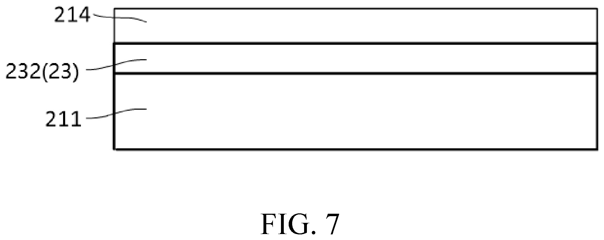

Referring to FIG. 3, FIG. 6, and FIG. 7, in some embodiments, the shell 21 includes the end cover and the case 213. The end cover constitutes the first wall 211 and fits and covers the case 213. A plastic member 214 is disposed on a side of the end cover that faces the case 213. The plastic member 214 is configured to space apart the end cover and the electrode assembly 22. The high-temperature resistant insulation layer 23 includes an insulation coating 232 located between the end cover and the plastic member 214. A heat resistance temperature of the insulation coating 232 is greater than a melting point of the plastic member 214.

For example, in FIG. 3, the case 213 is of a cuboid structure, the end cover is of a plate-like structure. The end cover fits and covers an opening at the top of the case 213. In other embodiments, the case 213 may alternatively be cylindrical or of another shape, and the end cover fits the shape of the case 213. The plastic member 214 is fixed on the side of the end cover that faces the case 213. The plastic member 214 has insulation performance and can isolate the end cover from the electrode assembly 22. It may be understood that as the electrode connecting member 221 needs to be connected to the electrode terminal 212, the plastic member 214 is provided with a through-hole for avoiding the electrode terminal 212.

Optionally, the insulation coating 232 is attached to a surface of the end cover by means of spraying, coating, or the like. In other embodiments, the insulation coating 232 may be attached to a surface of the plastic member 214 by means of spraying, coating, or the like. The insulation coating 232 has good heat resistance performance, and the heat resistance temperature of the insulation coating 232 is greater than the melting point of the plastic member 214. When a temperature rise is caused by large-current charging and discharging or a thermal runaway of the electrode assembly 22, the plastic member 214 may be melted. In this case, the insulation coating 232 can still isolate the electrode connecting member 221 from the end cover, thereby reducing the risk of short circuit occurring between the electrode connecting member 221 and the end cover. The electrode connecting member 221 includes the tab 2211 and the adapter plate 2212. The insulation coating 232 can isolate the adapter plate 2212 from the end cover, and also isolate the tab 2211 from the end cover.

In this embodiment of the present application, the insulation coating 232 is disposed between the end cover and the plastic member 214, so that the risk of the electrode connecting member 221 directly contacting the end cover caused by melting of the plastic member 214 in a high-temperature environment can be reduced. That is, the risk of short circuit occurring between the electrode connecting member 221 and the shell 21 is reduced, thereby reducing the risk of thermal runaway caused by an internal short circuit of the battery cell 20, and improving the safety and reliability of the battery cell 20.

Referring to FIG. 3 and FIG. 6, in some embodiments, the insulation coating 232 is disposed on the surface of the end cover facing the electrode assembly 22 and does not cover the electrode terminal 212.

Before the plastic member 214 is fixed to the end cover, a high-temperature resistant insulation material is first formed on the surface of the end cover by means of spraying, coating, physical vapor deposition (PVD), chemical vapor deposition (CVD), or the like on the end cover, so as to form the insulation coating 232. The insulation coating 232 avoids the electrode lead-out hole 2113. Since the electrode terminal 212 needs to be connected to the electrode connecting member 221, the insulation coating 232 does not need to cover the electrode terminal 212. The insulation coating 232 is disposed on the end cover and easy to produce, forms a uniform film, and can achieve a good insulation effect between the end cover and the electrode assembly 22.

A material of the insulation coating 232 includes an organic polymer or a metal oxide. The organic polymer includes one of polytetrafluoroethylene, polyethylene, polypropylene, polyethylene terephthalate, and polyimide. The metal oxide includes one of aluminum oxide, aluminum hydroxide, titanium dioxide, and magnesium oxide. The insulation coating 232 of the material described above has good insulation performance and a high-temperature resistance property. It may be understood that the insulation coating 232 may alternatively be of another material having an insulation property and a high-temperature resistance property.

In some embodiments, in the thickness direction of the first wall 211, a projection of the electrode connecting member 221 is located within a projection range of the insulation coating 232.

As such, the electrode connecting member 221 can be completely covered by the insulation coating 232. It may be understood that, at least part of the electrode connecting member 221 needs to be covered by the insulation coating 232.

In some embodiments, the heat resistance temperature of the insulation coating 232 is 400°C to 1000°C.

The insulation coating 232 may be made of a variety of high-temperature resistant insulation materials. Different materials result in different heat resistance temperatures of the insulation coating 232. The heat resistance temperature of the insulation coating 232 is within a large range. For example, the heat resistance temperature of the insulation coating 232 may be 400°C, 500°C, 600°C, 700°C, 800°C, 900°C, 1000°C, or the like.

Taking a target cell of an LFP module as an example, a thermal runaway temperature is 240°C to 350°C. The temperature rise of the electrode assembly 22 will cause hot melting of the plastic member 214. In this case, the heat resistance temperature of the insulation coating 232 is greater than or equal to 400°C, so that the insulation coating 232 can still maintain the insulation performance. LFP is a lithium-ion battery, and is an abbreviation for lithium iron phosphate battery.

The insulation coating 232 has a high heat resistance temperature. In a process in which the temperature of the battery cell 20 gradually rises and when a thermal runaway occurs, the insulation coating 232 can maintain the chemical performance thereof for a long time. The insulation coating 232 can space apart the end cover and the electrode assembly 22. The insulation coating 232 is applicable to a lithium battery system.

The thickness of the insulation coating 232 may be 0.05 mm to 0.15 mm. As such, the thickness of the insulation coating 232 does not cause a significant increase in a thickness of the end cover, while a good protection effect can be achieved. For example, the thickness of the insulation coating 232 is 0.1 mm. It may be understood that the thickness of the insulation coating 232 may also be adjusted according to demands of the battery cell 20. For example, the thickness of the insulation coating 232 may range from 0.02 mm to 0.3 mm.

Referring to FIG. 3, in some embodiments, the battery cell 20 further includes a high-temperature resistant protective film 24. The high-temperature resistant protective film 24 is wrapped on at least part of the shell 21. A melting point of the high-temperature resistant protective film 24 is greater than or equal to 500°C.

The high-temperature resistant protective film 24 is of a high-temperature resistant insulation material, and can space apart adjacent battery cells 20, to block an impact of a single battery cell 20 on another battery cell 20 due to various faults. The high-temperature resistant protective film 24 is wrapped on the shell 21. The high-temperature resistant protective film 24 may surround an entire surface of the shell 21, or may cover at least part of the surface of the shell 21. In some embodiments, the high-temperature resistant protective film 24 is wrapped on both the end cover and the case 213. The battery cell 20 further includes a top patch 215 fixed on a side of the end cover that faces away from the case 213, The high-temperature resistant protective film 24 is wrapped on an outer side of the top patch 215.

The melting point of the high-temperature resistant protective film 24 is greater than or equal to 500°C. When a temperature rise is caused by large-current charging and discharging or a thermal runaway of the electrode assembly 22, the high-temperature resistant protective film 24 on the surface of the electrode assembly 22 is not melted, so that heat transfer between the battery cells 20 in a module can be reduced. As such, temperatures of adjacent ones of the battery cells 20 are reduced, thereby reducing the risk of thermal propagation, which further improves the safety. In some related technologies, a blue film is wrapped on the shell 21. The blue film is an insulation film, and is used for insulating and protecting the battery cell 20, to avoid a short circuit caused by a contact between the shells 21 of the adjacent battery cells or a contact between the shell 21 of the battery cell 20 and the box of the battery. The high-temperature resistant protective film 24 provided in this embodiment of the present application replaces the conventional blue film. Compared to the blue film, the high-temperature resistant protective film 24 can withstand a higher temperature, thereby reducing the heat transfer between adjacent ones of the battery cells 20.

In some embodiments, a material of the high-temperature resistant protective film 24 includes PI adhesive.

The PI adhesive is an adhesive mainly composed of a polyimide resin, a solvent, and a curing agent. A proportion of the PI adhesive may be adjusted according to demands. For example, 50% of the material of the high-temperature resistant protective film 24 is the PI adhesive. The high-temperature resistant protective film 24 is a composite film, and further includes a component such as an epoxy.

Since the PI adhesive has good heat resistance, compared to the conventional blue film, the high-temperature resistant protective film 24 significantly improves resistance performance.

In some embodiments, a thickness of the high-temperature resistant protective film 24 is 0.15 mm to 0.25 mm. For example, the thickness of the high-temperature resistant protective film 24 is 0.15 mm, 0.2 mm, 0.25 mm, or the like. With the foregoing technical solution, the high-temperature resistant protective film 24 can not only achieve a good protection effect on the battery cell 20, but also avoid occupying too much space within the module.

Referring to FIG. 3 to FIG. 7, the battery cell 20 includes the shell 21, the electrode assembly 22, and the high-temperature resistant insulation layer 23. The shell 21 has the first wall 211, and the electrode terminal 212 is disposed on the first wall 211. The electrode assembly 22 is disposed within the shell 21. The electrode connecting member 221 is disposed on the electrode assembly 22. The electrode connecting member 221 is electrically connected to the electrode terminal 212. The high-temperature resistant insulation layer 23 is disposed between the first wall 211 and the electrode connecting member 221. The high-temperature resistant insulation layer 23 includes at least one of the protective adhesive 231 and the insulation coating 232. The protective adhesive 231 is disposed between the adapter plate 2212 and the first wall 211. The tab connecting portion 2212b and the tab 2211 are covered by the protective adhesive 231, while the terminal connecting portion 2212a is not covered by the protective adhesive 231. The insulation coating 232 is located between the end cover and the plastic member 214. The battery cell 20 further includes the high-temperature resistant protective film 24. The high-temperature resistant protective film 24 is wrapped on at least part of the shell 21. The battery cell 20 further includes an insulation plate 223 that is wrapped on an outer side of the electrode assembly 22 and configured to protect and insulate the electrode assembly 22, so as to prevent a short circuit as a result of the electrode assembly 22 contacting the shell 21 during working.

In the battery cell 20 provided in this embodiment of the present application, the risk of thermal runaway caused by a short circuit occurring between the electrode assembly 22 and the shell 21 is reduced, thereby reducing the risk of burning or even exploding of the battery cell 20.

According to a second aspect of the present application, a battery 100 is provided, including the battery cell 20 provided in the third aspect.

According to a third aspect of the present application, a power consuming apparatus is provided, including the battery 100 provided in the second aspect, where the battery 100 is configured to supply electric energy to the power consuming apparatus.

The power consuming apparatus may be any one of the foregoing devices or systems that employs a battery.

It should to be noted that the features in the embodiments of the present application can be combined with each other without any conflict.

The above embodiments are merely intended for describing the technical solutions of the present application, but not for limiting the present application. Although the present application is described in detail with reference to the foregoing embodiments, those of ordinary skill in the art will understand that they can still make modifications to the technical solutions described in the foregoing embodiments or make equivalent replacements to some technical features thereof. Such modifications or replacements do not cause the essence of corresponding technical solutions to depart from the spirit and scope of the technical solutions of the embodiments of the present application, and shall all fall within the scope of protection of the present application.

## Claims

1. A battery cell, comprising:
a shell comprising a first wall and an electrode terminal, wherein the electrode terminal is disposed on the first wall;
an electrode assembly disposed within the shell, the electrode assembly comprising an electrode connecting member, wherein the electrode connecting member is electrically connected to the electrode terminal; and
a high-temperature resistant insulation layer disposed at least in part between the first wall and the electrode connecting member, to insulate and space apart the first wall from the electrode connecting member.

2. The battery cell according to claim 1, wherein the electrode connecting member comprises a tab and an adapter plate, wherein the adapter plate comprises a terminal connecting portion and a tab connecting portion connected to each other, the terminal connecting portion being connected to the electrode terminal, and the tab connecting portion being connected to the tab;
the high-temperature resistant insulation layer comprises a protective adhesive disposed between the adapter plate and the first wall, wherein in a thickness direction of the first wall, a projection of the tab connecting portion and a projection of the tab are located at least in part within a projection range of the protective adhesive.

3. The battery cell according to claim 2, wherein there are a plurality of tab connecting portions in the adapter plate, wherein the plurality of tab connecting portions are arranged in a width direction of the adapter plate, and the terminal connecting portion is disposed between two adjacent ones of the tab connecting portions;
the protective adhesive comprises a plurality of adhesive sheets, wherein the plurality of adhesive sheets are disposed in a one-to-one correspondence with the plurality of tab connecting portions.

4. The battery cell according to claim 3, wherein a length of the adhesive sheet is greater than or equal to a length of the adapter plate, and a width of the adhesive sheet is greater than or equal to a width of the tab connecting portion.

5. The battery cell according to claim 4, wherein the tab comprises a plurality of stacked tab plates;
in a length direction of the adapter plate, a difference between the length of the adhesive sheet and a width of the tab plate is 12 mm to 14 mm.

6. The battery cell according to claim 4 or 5, wherein the width of the adhesive sheet satisfies: $W 3 \geq \left[H+\left(W1-W2\right)\right] * 2 ,$ wherein
W1 is the width of the tab connecting portion, W2 is a width of an overlap region of the tab connecting portion and the tab, W3 is the width of the adhesive sheet, and H is a height of the tab.

7. The battery cell according to claim 6, wherein the width of the adhesive sheet satisfies: $W 3 = \left[H+\left(W1-W2\right)+2 mm\right] * 2 .$

8. The battery cell according to any one of claims 2 to 7, wherein a thickness of the protective adhesive is 0.1 mm to 0.5 mm.

9. The battery cell according to claim 8, wherein the thickness of the protective adhesive is 0.1 mm to 0.3 mm.

10. The battery cell according to any one of claims 2 to 9, wherein a melting point of the protective adhesive is 320°C to 500°C.

11. The battery cell according to claim 10, wherein the melting point of the protective adhesive is greater than 350°C and less than or equal to 500°C.

12. The battery cell according to any one of claims 2 to 11, wherein the protective adhesive is a PI adhesive tape or a Teflon adhesive tape.

13. The battery cell according to any one of claims 1 to 12, wherein the shell comprises an end cover and a case, wherein the end cover constitutes the first wall and fits and covers the case, a plastic member is disposed on a side of the end cover that faces the case, and the plastic member is configured to space apart the end cover and the electrode assembly;
the high-temperature resistant insulation layer comprises an insulation coating located between the end cover and the plastic member, wherein a heat resistance temperature of the insulation coating is greater than a melting point of the plastic member.

14. The battery cell according to claim 13, wherein the insulation coating is disposed on a surface of the end cover facing the case and does not cover the electrode terminal.

15. The battery cell according to claim 13, wherein in the thickness direction of the first wall, a projection of the electrode connecting member is located within a projection range of the insulation coating.

16. The battery cell according to any one of claims 13 to 15, wherein the heat resistance temperature of the insulation coating is 400°C to 1000°C.

17. The battery cell according to any one of claims 13 to 16, wherein a material of the insulation coating comprises an organic polymer or a metal oxide, wherein the organic polymer comprises one of polytetrafluoroethylene, polyethylene, polypropylene, polyethylene terephthalate, and polyimide, and the metal oxide comprises one of aluminum oxide, aluminum hydroxide, titanium dioxide, and magnesium oxide.

18. The battery cell according to any one of claims 13 to 17, wherein a thickness of the insulation coating is 0.05 mm to 0.15 mm.

19. The battery cell according to any one of claims 1 to 18, wherein the battery cell further comprises a high-temperature resistant protective film, wherein the high-temperature resistant protective film is wrapped on at least part of the shell, and a melting point of the high-temperature resistant protective film is greater than or equal to 500°C.

20. The battery cell according to claim 19, wherein a material of the high-temperature resistant protective film comprises PI adhesive.

21. The battery cell according to claim 19 or 20, wherein a thickness of the high-temperature resistant protective film is 0.15 mm to 0.25 mm.

22. A battery, comprising the battery cell according to any one of claims 1 to 21.

23. A power consuming apparatus, comprising the battery according to claim 22, wherein the battery is configured to supply electric energy to the power consuming apparatus.
